# EUROPEAN PATENT APPLICATION

(11) **EP 4 471 298 A1**
(43) Date of publication of application: **04.12.2024**
(21) Application number: 24178285.3
(22) Date of filing: 27.05.2024
(51) Int. Cl.: F16H 61/28, F16H 63/18, F16H 61/32, F16H 63/30, F16H 57/02, F16H 63/00

(54) **STRADDLED VEHICLE EQUIPPED WITH PARALLEL MULTICYLINDER ENGINE**

(30) Priority: 02.06.2023 JP 2023091608
(71) Applicant: Yamaha Hatsudoki Kabushiki Kaisha, Iwata-shi, Shizuoka 438-8501 (JP)
(72) Inventor: TERASHIMA, Yoshiki, Iwata-shi, Shizuoka, 438-8501 (JP); SEKIYA, Yu, Iwata-shi, Shizuoka, 438-8501 (JP)
(74) Representative: Stöckeler, Ferdinand

(57) **Abstract**

[Problem]

An objective is to provide an MT straddled vehicle equipped with a parallel multicylinder engine wherein a clutch actuator and a shift actuator can be compactly arranged, thereby downsizing of the vehicle.

[Solution]

An MT straddled vehicle 1 equipped with a parallel multicylinder engine according to the present teaching includes an engine 10, a clutch actuator 30 and a shift actuator 40, wherein a clutch gear box 32, a clutch motor 31, a shift motor 41, and a shift gear box 42 are arranged in this order in a left-right direction X, and the clutch actuator 30 and the shift actuator 40 are attached to the engine 10 not via a vehicle frame 5 such that, in a side view, each of the clutch actuator 30 and the shift actuator 40 is at least partly positioned between an up-down hypothetical line K4 and a rear edge 11e of cylinders 11 and between a front-rear hypothetical line K2 and an upper edge 12e of a crankcase 12.

## Description

### Technical Field

The present teaching relates to an MT straddled vehicle equipped with a parallel multicylinder engine that includes a multi-speed transmission wherein the acting force of an actuator can be inputted to a clutch or a speed changer.

### Background Art

Conventionally, an MT straddled vehicle equipped with a parallel multicylinder engine that includes a multi-speed transmission to which the acting force of an actuator can be inputted to assist in the rider's shifting action has been provided. Such an MT straddled vehicle equipped with a parallel multicylinder engine that includes a multi-speed transmission has a clutch actuator and a shift actuator that constitute the multi-speed transmission. A straddled vehicle with a multi-speed transmission is disclosed, for example, in Patent Literature 1 below.

### Citation List

### Patent Literature

Patent Literature 1: Japanese Patent Application Publication No. 2006-17221

### Summary of Invention

### Technical Problem

An MT straddled vehicle equipped with a parallel multicylinder engine is a vehicle that turns by a weight shift of the rider. Therefore, downsizing of the vehicle is highly needed. If such an MT straddled vehicle equipped with a parallel multicylinder engine is designed to meet the need for downsizing and to contain a multi-speed transmission as described above, the space for arrangement of the components is limited. Then, an MT straddled vehicle equipped with a parallel multicylinder engine that includes a multi-speed transmission requires an ingenuity in arrangement of a clutch actuator and a shift actuator that constitute the multi-speed transmission.

An objective of the present teaching is to provide an MT straddled vehicle equipped with a parallel multicylinder engine that includes a multi-speed transmission that assists the rider's shifting action, wherein a clutch actuator and a shift actuator can be compactly arranged, thereby downsizing the vehicle.

### Solutions to Problem

The inventors of the present application conducted studies about compact arrangement of a clutch actuator and a shift actuator. As a result, the inventors obtained the following findings.

As mentioned above, downsizing of an MT straddled vehicle equipped with a parallel multicylinder engine is highly demanded, and the space for arrangement of the components is limited. In providing a multi-speed transmission as described above in an MT straddled vehicle equipped with a parallel multicylinder engine, the inventors of the present application studied about the space for arrangement of actuators (a clutch actuator and a shift actuator) constituting the multi-speed transmission. At that time, the inventors of the present application paid attention to the fact that in an MT straddled vehicle equipped with a parallel multicylinder engine, a speed changer and a clutch are both located in the parallel multicylinder engine. Then, the inventors of the present application hit upon an idea of arranging the clutch actuator and the shift actuator near the parallel multicylinder engine and studied whether there is a space for the clutch actuator and the shift actuator near the parallel multicylinder engine. As a result, the inventors of the present application obtained a finding that in the space around the parallel multicylinder engine, there may be a space for the clutch actuator and the shift actuator behind the cylinders and above the crankcase (in the rear of the engine). However, in the space in the rear of the engine, for example, an air cleaner, a rear suspension, a starter motor, a throttle body, a canister, etc., are located, and an ingenuity is required for compact arrangement. Moreover, the actuators constituting the multi-speed transmission may have to be increased in size to generate a needed output. The inventors of the present application furthermore studied about the structure that permits the actuators to be arranged in the limited space in the rear of the engine. As a result, the inventors of the present application obtained a finding that it is possible to compactly arrange the actuators constituting the multi-speed transmission in the limited space by arranging the actuators constituting the multi-speed transmission side by side, on left and right, and by arranging the actuators close to each other. Based on these findings, the present teaching has been made.

According to some aspects of the present teaching, which has been made based on the findings above, MT straddled vehicles equipped with a parallel multicylinder engine have the following structures.
(1) An MT straddled vehicle equipped with a parallel multicylinder engine according to an embodiment of the present teaching includes a parallel multicylinder engine and a multi-speed transmission, the parallel multicylinder engine including a plurality of cylinders arranged in parallel, and a crankcase supporting a crankshaft, and in the MT straddled vehicle equipped with a parallel multicylinder engine, the multi-speed transmission comprising: an input shaft that is rotatably supported by the crankcase, a plurality of drive gears being provided on the input shaft; an output shaft that is rotatably supported by the crankcase and outputs power toward a drive wheel, a plurality of driven gears engaging with the drive gears being provided on the output shaft; a clutch located on a power transmission pathway from the crankshaft to the output shaft; a clutch actuator including a clutch motor, and a clutch gear box containing a deceleration mechanism to which power of the clutch motor is transmitted, the deceleration mechanism being located on a power transmission pathway from the clutch motor to the clutch; a shift actuator including a shift motor, and a shift gear box containing a deceleration mechanism to which power of the shift motor is transmitted, the deceleration mechanism being located on a power transmission pathway from the shift motor to a shifter mechanism, and the clutch actuator and the shift actuator are attached to the parallel multicylinder engine not via a vehicle frame in such a manner as to meet the following requirements that: the clutch gear box, the clutch motor, the shift motor, and the shift gear box are arranged in this order in a left-right direction of the vehicle; and in a looking-to-the-right or -left view, each of the clutch actuator and the shift actuator is at least partly positioned between a straight line that extends in an up-down direction of the vehicle passing through a rear end, with respect to a front-rear direction of the vehicle, of the crankcase and a rear edge of the cylinders and between a straight line that extends in the front-rear direction passing through an upper end, with respect to the up-down direction, of the cylinders and an upper edge of the crankcase.
(1) According to the present teaching, the clutch actuator and the shift actuator are attached to the parallel multicylinder engine not via the vehicle frame such that, in a looking-to-the-right or -left view, each of the actuators is at least partly positioned in a space behind the cylinders and above the crankcase (in a space in the rear of the engine), and specifically, by arranging the clutch gear box, the clutch motor, the shift motor, and the shift gear box in this order in the left-right direction of the vehicle and close to one another while effectively using the space in the rear of the parallel multicylinder engine, these actuators can be compactly arranged near the parallel multicylinder engine. Various components (for example, an air cleaner, a rear suspension, etc.) are located behind the cylinders and above the crankcase, and the space is limited. According to the present teaching, the actuators of the multi-speed transmission can be arranged near the engine compactly in the limited space. The straddled vehicle is a vehicle that turns by the rider's weight shift, and downsizing is highly needed. According to the present teaching, the actuators constituting the multi-speed transmission can be compactly arranged, which contributes to downsizing of the vehicle.

In an aspect of the present teaching, the MT straddled vehicle equipped with a parallel multicylinder engine may be configured as follows.

(2) In the straddled vehicle equipped with a parallel multicylinder engine of (1) above, the clutch actuator and the shift actuator are attached to the parallel multicylinder engine not via the vehicle frame in such a manner as to further meet the following requirement that a left-right arrangement distance is shorter than a total of a clutch actuator left-to-right entire length and a shift actuator left-to-right entire length, wherein: the clutch actuator left-to-right entire length is a length in the left-right direction of the clutch actuator, from a right end to a left end, when the clutch actuator is positioned in the vehicle; the shift actuator left-to-right entire length is a length in the left-right direction of the shift actuator, from a right end to a left end, when the shift actuator is positioned in the vehicle; and the left-right arrangement distance is a distance in the left-right direction between a right-end reference position that is either one of the right end of the clutch actuator and the right end of the shift actuator that is located more rightward than the other and a left-end reference position that is either one of the left end of the clutch actuator and the left end of the shift actuator that is located more leftward than the other.

In the MT straddled vehicle equipped with a parallel multicylinder engine of (2) above, the respective motors of the actuators can be arranged close to each other, and the actuators can be arranged compactly in the left-right direction. More specifically, in arranging the actuators, it is necessary to consider the lengths of the motors. The motors of the actuators need to produce large power to fulfill the functions (shift change, and clutch engagement and disengagement), and therefore, large motors (motors that are large in length or diameter) are used as the motors of the actuators. By overlapping the clutch motor and the shift motor, the lengths of the two motors are offset by each other, and the actuators can be arranged more compactly.

In another aspect of the present teaching, the MT straddled vehicle equipped with a parallel multicylinder engine may be configured as follows.

(3) In the MT straddled vehicle equipped with a parallel multicylinder engine of (1) or (2) above, the clutch actuator and the shift actuator are attached to the parallel multicylinder engine not via the vehicle frame in such a manner as to further meet the following requirement that the clutch gear box and the shift gear box are arranged in such a manner as to at least partly overlap in a looking-to-the-right or -left view.

In the MT straddled vehicle equipped with a parallel multicylinder engine of (3) above, these actuators can be arranged in one side at least in the front-rear direction or in the up-down direction and thereby can be compactly arranged.

In another aspect of the present teaching, the MT straddled vehicle equipped with a parallel multicylinder engine may be configured as follows.

(4) In the MT straddled vehicle equipped with a parallel multicylinder engine according to any one of (1) to (3) above, the clutch actuator and the shift actuator are attached to the parallel multicylinder engine not via the vehicle frame in such a manner as to further meet the following requirements that: between the right and the left of a case centerline, the clutch gear box is positioned on one side; and the shift gear box is positioned on the other side, wherein the case centerline is a straight line that includes a midpoint, with respect to the left-right direction, of the crankcase and extends in the front-rear direction.

In the MT straddled vehicle equipped with a parallel multicylinder engine of (4) above, the actuators can be arranged with the left-right weight balance of the vehicle improved.

In another aspect of the present teaching, the MT straddled vehicle equipped with a parallel multicylinder engine may be configured as follows.

(5) In the MT straddled vehicle equipped with a parallel multicylinder engine of any one of (1) to (4) above, the clutch actuator and the shift actuator are attached to the parallel multicylinder engine not via the vehicle frame in such a manner as to further meet the following requirement that each of the clutch motor and the shift motor is at least partly positioned lower than a hypothetical tangent line in a looking-to-the-right or -left view, wherein the hypothetical tangent line is a tangent line that includes a tangential point in an upper portion of the cylinders and a tangential point in a rear portion of the crankcase.

In the MT straddled vehicle equipped with a parallel multicylinder engine of (5) above, the actuators can be arranged still closer to the engine and can be compactly arranged.

In another aspect of the present teaching, the MT straddled vehicle equipped with a parallel multicylinder engine may be configured as follows.

(6) In the MT straddled vehicle equipped with a parallel multicylinder engine according to any one of (1) to (5) above, the clutch actuator and the shift actuator are attached to the parallel multicylinder engine not via the vehicle frame in such a manner as to further meet the following requirement that respective axes of the clutch motor and the shift motor extend in the left-right direction.

In the MT straddled vehicle equipped with a parallel multicylinder engine of (6) above, for example, by overlapping the two motors in the axial direction, the lengths of the two motors can be offset by each other, and the actuators can be arranged more compactly. Additionally, as the motors, ones of a size adequate to produce the needed power are selected. Specifically, the motors of the actuators need to produce large power to fulfill the functions (shift change, and clutch engagement and disengagement), and therefore, large motors (motors that are large in length or diameter) are used as the motors of the actuators. For example, by arranging the motors such that the respective axes extend in the left-right direction and that the motors overlap in the axial direction, the lengths of the two motors are offset by each other, and the motors can be compactly arranged in the left-right direction.

In another aspect of the present teaching, the MT straddled vehicle equipped with a parallel multicylinder engine may be configured as follows.

(7) In the MT straddled vehicle equipped with a parallel multicylinder engine of any one of (1) to (6) above, the clutch actuator and the shift actuator are attached to the parallel multicylinder engine not via the vehicle frame in such a manner as to further meet either the following requirement that a front-rear arrangement distance is shorter than a total of a clutch actuator front-to-rear entire length and a shift actuator front-to-rear entire length or the following requirement that an up-down arrangement distance is shorter than a total of a clutch actuator upper-to-lower entire length and a shift actuator upper-to-lower entire length, wherein: the clutch actuator front-to-rear entire length is a length in the front-rear direction of the clutch actuator, from a front end to a rear end, when the clutch actuator is positioned in the vehicle; the shift actuator front-to-rear entire length is a length in the front-rear direction of the shift actuator, from a front end to a rear end, when the shift actuator is positioned in the vehicle; the front-rear arrangement distance is a distance in the front-rear direction between a front-end reference position that is either one of the front end of the clutch actuator and the front end of the shift actuator that is located more frontward than the other and a rear-end reference position that is either one of the rear end of the clutch actuator and the rear end of the shift actuator that is located more rearward than the other; the clutch actuator upper-to-lower entire length is a length in the up-down direction of the clutch actuator, from an upper end to a lower end, when the clutch actuator is positioned in the vehicle; the shift actuator upper-to-lower entire length is a length in the up-down direction of the shift actuator, from an upper end to a lower end, when the shift actuator is positioned in the vehicle; the up-down arrangement distance is a distance in the up-down direction between an upper-end reference position that is either one of the upper end of the clutch actuator and the upper end of the shift actuator that is located more upward than the other and a lower-end reference position that is either one of the lower end of the clutch actuator and the lower end of the shift actuator that is located more downward than the other.

In the MT straddled vehicle equipped with a parallel multicylinder engine of (7), the actuators can be arranged compactly in at least one of the up-down direction or the front-rear direction.

In another aspect of the present teaching, the MT straddled vehicle equipped with a parallel multicylinder engine may be configured as follows.

(8) In the MT straddled vehicle equipped with a parallel multicylinder engine of any one of (1) to (7) above, the clutch actuator and the shift actuator are attached to the parallel multicylinder engine not via the vehicle frame in such a manner as to further meet the following requirement that each of the clutch actuator and the shift actuator is at least partly positioned in a region enclosed by an outer edge of the crankcase in a looking-to-the-down view.

In the MT straddled vehicle equipped with a parallel multicylinder engine of (8) above, by use of the region above the crankcase, the actuators can be arranged compactly in the left-right direction.

Some embodiments of the present teaching will hereinafter be described in detail with reference to the drawings, and the detailed description of the embodiments will provide a clearer picture of the above-mentioned objective and other objectives, the features, the aspects and the advantages of the present teaching. The term "and/or" used herein includes one of the associated items in a list and all possible combinations of the associated items. The terms "including", "comprising", or "having", and variations thereof used herein specify the presence of stated features, steps, operations, elements, components, and/or equivalents thereof, and can include one or more steps, operations, elements, components, and/or one or more of their groups. Unless otherwise defined, all terms (including technical and scientific terms) used herein have the same meanings as commonly understood by one of ordinary skill in the art to which the present teaching pertains. It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein. It should be understood that the description of the present teaching discloses a number of techniques and steps. Each of these has an individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the description given below, for the purpose of explanation, numerous specific details are set forth in order to provide a complete understanding of the present teaching. It will be apparent, however, that those skilled in the art may practice the present teaching without these specific details. The present disclosure is to be considered as exemplification of the present teaching and is not intended to limit the present teaching to the specific embodiments illustrated by drawings or descriptions below.

The MT straddled vehicle equipped with a parallel multicylinder engine is a straddled vehicle that has a parallel multicylinder engine and a manual multi-speed transmission. The straddled vehicle is a vehicle that a rider gets on straddling a saddle. As the straddled vehicle, for example, two-wheel motor vehicles of a moped type, an offroad type and an on-road type can be named. The straddled vehicle is not limited to a two-wheel motor vehicle and may be, for example, a three-wheel motor vehicle, an ATV (all-terrain vehicle) or the like. The three-wheel motor vehicle may have two front wheels and one rear wheel or may have one front wheel and two rear wheels. The drive wheel of the straddled vehicle may be the front wheel(s) or the rear wheel(s). The drive wheel of the straddled vehicle may be both the front wheel(s) and the rear wheel(s). The straddled vehicle may be configured to be able to turn in a leaning posture. The straddled vehicle that is configured to be able to turn in a leaning posture is configured to turn in a posture leaning toward the center of the curve. Thereby, the straddled vehicle that is configured to be able to turn in a leaning posture counteracts centrifugal force applied to the vehicle when the vehicle is turning. The straddled vehicle that is configured to be able to turn in a leaning posture is required to be frisky, and the responsiveness of onward movement to operation to start the vehicle is considered important. The MT straddled vehicle, for example, does not have a torque converter using hydrodynamic action on a power transmission pathway from the engine to the drive wheel.

The "parallel multicylinder engine" is an engine with a plurality of cylinders arranged in parallel to one another in the left-right direction of the vehicle. The parallel multicylinder engine includes twin-cylinder engines, three-cylinder engines, etc. The engine may be a regular-interval-explosion engine or an irregular-interval-explosion engine. For example, the engine is a four-stroke engine. The engine is, for example, a petrol engine but may be a diesel engine. The engine is, for example, a water-cooled engine but may be an air-cooled engine. The engine is, for example, an inlet-pipe injection type but may be a direct injection type. The crankshaft extends in the left-right direction of the vehicle. Accordingly, the axial direction of the crankshaft is, for example, parallel to the left-right direction of the vehicle. The parallel multicylinder engine may have a speed changer housed in the crankcase.

The crankcase is configured to support the crankshaft such that the crankshaft is rotatable. The crankcase can be formed of a plurality of components. As the components constituting the crankcase, for example, a crankcase body, a crankcase cover, and a clutch cover can be named. Furthermore, the crankcase body can be formed of a plurality of components. For example, the crankcase body may be configured as a type that is separable into two parts in the left-right direction of the vehicle (vertically separable type) or a type that is separable into three or more parts. The crankcase may be integrated with a cylinder block or may be a separate member from the cylinders. The crankcase cover is located outside of the crankcase body in the left-right direction of the vehicle.

The statement that "respective axes of the clutch motor and the shift motor extend in the left-right direction" means that the axes of the motors extend roughly in the left-right direction and does not mean that the axial direction of the motors completely coincides with the left-right direction. Accordingly, the axes of these two motors are not necessarily completely parallel to the left-right direction. For example, each of the axes of these motors may form a specified inclination angle with the left-right direction. The statement that each of the axes of the motors forms a specified inclination angle with the left-right direction means that each of the axes of the motors is at a specified angle (for example, at an acute angle within ±45 degrees) to the left-right direction.

Thus, the axis of the clutch motor and the axis of the shift motor may be parallel to the axis of the crankshaft or may be inclined from the axis of the crankshaft. Additionally, the axis of the clutch motor and the axis of the shift motor may be parallel to the axis of the input or output shaft or may be inclined from the axis of the input or output shaft.

The multi-speed transmission has a plurality of gear positions. The multi-speed transmission may further have a neutral position. The number of gear positions is not particularly limited and, for example, the multi-speed transmission has four to six gear positions in addition to a neutral position. The multi-speed transmission further may have a reverse position. The multi-speed transmission is, for example, a bottom-neutral type but may be a half-neutral type (bottom-low type). The bottom-neutral type means a shift pattern in which the neutral position is lower than the first position. The half-neutral type means a shift pattern in which the neutral position is between the first position and the second position. The multi-speed transmission is, for example, a return transmission but may be a rotary transmission.

The input shaft is parallel to or substantially parallel to the crankshaft. The input shaft, for example, has gears that engage with gears provided on the crankshaft, and the input shaft is configured such that power is inputted thereto from the crankshaft via the gears. The input shaft has a plurality of drive gears corresponding to the plurality of gear positions. The plurality of drive gears are arranged, for example, in the axial direction of the input shaft.

The output shaft is parallel to or substantially parallel to the input shaft. The output shaft has a plurality of driven gears corresponding to the plurality of gear positions. Each of the driven gears engages with the corresponding drive gear. For example, the output shaft has a sprocket, and a drive chain is wound around the sprocket so that power is transmitted to the drive wheel via the drive chain. The way to transmit power from the output shaft to the drive wheel is not limited to this example.

The shifter mechanism includes a shift shaft and a shift cam. The shift actuator transmits power in conjunction with the shift shaft. When the shift shaft rotates, the shift cam rotates, and the gears on the input shaft and the output shaft move in the axial direction, whereby a gear change is conducted.

The clutch operates in accordance with the rider's action. For example, the clutch is a start-and-gear-change dual-purpose clutch of which engaged or disengaged state is changed both at a time of starting to move the vehicle and at a time of changing the gear position. The clutch may be a multiplate or single plate clutch of a wet or dry type.

The clutch actuator includes a clutch motor, and a clutch gear box that contains a deceleration mechanism to which the power of the clutch motor is transmitted. For example, the deceleration mechanism is formed of a plurality of gears located on a power transmission pathway from the clutch motor to the clutch. The clutch motor is a motor used to engage and disengage the clutch.

The shift actuator includes a shift motor, and a shift gear box that contains a deceleration mechanism to which the power of the shift motor is transmitted. For example, the deceleration mechanism is formed of a plurality of gears located on a power transmission pathway from the shift motor to the shifter mechanism. This deceleration mechanism is located on the power transmission pathway from the shift motor to the shifter mechanism. The clutch motor and the shift motor are not particularly limited, and well-known conventional motors can be used.

The statement that "the clutch actuator and the shift actuator are attached to the parallel multicylinder engine not via a vehicle frame" means that each of the actuators is directly attached to the parallel multicylinder engine or indirectly attached to the parallel multicylinder engine via a bracket or the like.

The term "arranged in the left-right direction" does not necessarily mean being positioned on one straight line. The term "arranged in the left-right direction" means being arranged in a specified order from right or from left. Thus, cases expressed by "arranged in the left-right direction" include cases in which some part of the things is off the straight line.

The term "in a looking-to-the-right or -left view" means in a side view (a right-side view or a left-side view) of the straddled vehicle.

The term "rear edge of the cylinders" is a line seen in a side view as the edge of the rear faces of the cylinders (rear edge line of the cylinders). From another perspective, the "rear edge of the cylinders" is a line that is on the rear faces of the cylinders (is included in the rear faces of the cylinders) and, in a side view, forms a boundary (is a boundary line) between the cylinders and others (other components or space).

The term "upper end of the cylinders" is a point seen in a side view as the uppermost point of the cylinders. The term "straight line extending in the front-rear direction passing through an upper end, with respect to the up-down direction, of the cylinders" means a hypothetical line that, in a side view, extends in the front-rear direction passing through the upper end of the cylinders (front-rear hypothetical line).

The term "upper edge of the crankcase" is a line seen in a side view as the edge of the upper face of the crankcase (upper edge line of the crankcase). From another perspective, the "upper edge of the crankcase" is a line that is on the upper face of the crankcase (is included in the upper face of the crankcase) and, in a side view, forms a boundary (is a boundary line) between the crankcase and others (other components or space).

The term "rear end of the crankcase" is a point seen in a side view as the rearmost point of the crankcase. The term "straight line that extends in an up-down direction of the vehicle passing through a rear end, with respect to a front-rear direction of the vehicle, of the crankcase" means a straight line that, in a side view, extends in the up-down direction passing through the rear end of the crankcase (up-down hypothetical line).

The statement that "in a looking-to-the-right or -left view, each of the clutch actuator and the shift actuator is at least partly positioned between a straight line that extends in an up-down direction of the vehicle passing through a rear end, with respect to a front-rear direction of the vehicle, of the crankcase and a rear edge of the cylinders and between a straight line that extends in the front-rear direction of the vehicle passing through an upper end, with respect to the up-down direction, of the cylinders and an upper edge of the crankcase" means that in a side view, each of the clutch actuator and the shift actuator is at least partly positioned in a region enclosed by the rear edge of the cylinders (rear edge line of the cylinders in a side view), the upper edge of the crankcase (upper edge line of the crankcase in a side view), the front-rear hypothetical line, and the up-down hypothetical line.

The statement that in a looking-to-the right or -left view, each of the clutch motor and the shift motor is at least partly positioned lower than a hypothetical tangent line means that in a side view, when a region above the hypothetical tangent line is defined as an upper region and a region below the hypothetical tangent line is defined as a lower region, each of the clutch motor and the shift motor is at least partly positioned in the lower region.

The "lower region" is a region included in the region "between a straight line that extends in an up-down direction of the vehicle passing through a rear end, with respect to a front-rear direction of the vehicle, of the crankcase and a rear edge of the cylinders and between a straight line that extends in the front-rear direction of the vehicle passing through an upper end, with respect to the up-down direction, of the cylinders and an upper edge of the crankcase" in a side view. More specifically, the region "between a straight line that extends in an up-down direction of the vehicle passing through a rear end, with respect to a front-rear direction of the vehicle, of the crankcase and a rear edge of the cylinders and between a straight line that extends in the front-rear direction of the vehicle passing through an upper end, with respect to the up-down direction, of the cylinders and an upper edge of the crankcase" in a side view is divided, in a side view, by the hypothetical line into an upper region that is above the hypothetical tangent line and a lower region that is below the hypothetical tangent line.

The statement that "each of the clutch actuator and the shift actuator is at least partly positioned in a region enclosed by an outer edge of the crankcase in a looking-to-the-down view" means that in a plan view of the straddled vehicle, each of the clutch actuator and the shift actuator is at least partly positioned in a region defined by the edge line (outer edge) of the crankcase.

The positions of the clutch actuator and the shift actuator relative to each other are not limited. Specifically, it does not matter which of the clutch gear box and the shift gear box is positioned on the right. For example, the clutch gear box may be positioned on the right of the case centerline, and the shift gear box may be positioned on the left of the case centerline. Or the clutch gear box may be positioned on the left of the case centerline, and the shift gear box may be positioned on the right of the case centerline. Also, either one of the clutch actuator and the shift actuator may be positioned more frontward than the other, or these actuators may be located substantially at the same position in the front-rear direction. For example, one of the actuators may be positioned within the region of the front-to-rear entire length of the other actuator.

The term "left-right arrangement distance" means the distance in the left-right direction between the rightmost one of the respective right ends of the actuators and the leftmost one of the respective left ends of the actuators. Thus, when these two actuators are arranged such that the left-to-right entire length of one of the actuators is within the region occupied by the left-to-right entire length of the other actuator, there may be a relation of left-right arrangement distance = left-to-right entire length of clutch actuator or left-to-right entire length of shift actuator.

The term "front-rear arrangement distance" means the distance in the front-rear direction between the frontmost one of the respective front ends of the actuators and the rearmost one of the respective rear ends of the actuators. Thus, when these two actuators are arranged such that the front-to-rear entire length of one of the actuators is within the region occupied by the front-to-rear entire length of the other actuator, there may be a relation of front-rear arrangement distance = front-to-rear entire length of clutch actuator or front-to-rear entire length of shift actuator.

The term "up-down arrangement distance" means the distance in the up-down direction between the uppermost one of the respective upper ends of the actuators and the lowermost one of the respective lower ends of the actuators. Thus, when these two actuators are arranged such that the upper-to-lower entire length of one of the actuators is within the region occupied by the upper-to-lower entire length of the other actuator, there may be a relation of up-down arrangement distance = upper-to-lower entire length of clutch actuator or upper-to-lower entire length of shift actuator.

A shift coupling device (a rod, a lever, etc.) that connects the shifter mechanism and the shift actuator may be located outward from the shift actuator in the left-right direction. Also, a clutch coupling device (a rod, a lever, etc.) that connects the clutch and the clutch actuator may be located outward from the clutch actuator in the left-right direction. Such a structure improves the flexibility in arranging the coupling devices (rods, levers, etc.). Accordingly, the motion space for the rods and levers can be obtained easily. This also offers the benefit of improving the work easiness in attaching components of the coupling devices.

In the MT straddled vehicle equipped with a parallel multicylinder engine according to the present teaching, the distance between the axis of the clutch motor and the axis of the shift motor (inter-axial distance) is preferably not more than a specified distance. In the MT straddled vehicle equipped with a parallel multicylinder engine according to the present teaching, for example, the inter-axial distance of the motors is preferably shorter than either one of the left-right arrangement distance, the up-down arrangement distance and the front-rear arrangement distance. In such a structure, the motors can be arranged close to each other, and the actuators can be compactly arranged.

The "inter-axial distance" is the distance from a first intersection point and a second intersection point, wherein: the first intersection point is an intersection point between a case center hypothetical plane and the axis of the clutch motor; and the second intersection point is an intersection point between the case center hypothetical plane and the axis of the shift motor. The "case center hypothetical plane is a hypothetical plane that passes the case centerline and spreads in the up-down direction.

### Effect of Invention

The present teaching provides an MT straddled vehicle equipped with a parallel multicylinder engine that includes a multi-speed transmission that assists the rider's shifting action, wherein a clutch actuator and a shift actuator can be compactly arranged, thereby downsizing the vehicle.

### Brief Description of Drawings

[FIG. 1] FIG. 1 is a combination of a left-side view of a straddled vehicle according to a first embodiment of the present teaching and a schematic view showing the positions of an engine, a clutch actuator, and a shift actuator in the straddled vehicle.
[FIG. 2] FIG. 2 is a schematic side view showing a region defined by the engine positioned in the straddled vehicle of FIG. 1.
[FIG. 3] FIG. 3 is a schematic plan view showing the region defined by the engine positioned in the straddled vehicle of FIG. 1.
[FIG. 4] FIG. 4 is a perspective view of a multi-speed transmission provided in the straddled vehicle of FIG. 1.
[FIG. 5] FIG. 5 is a plan view showing the positions of the clutch actuator and the shift actuator in the straddled vehicle of FIG. 1.
[FIG. 6] FIG. 6 is a rear view showing the positions of the clutch actuator and the shift actuator in the straddled vehicle of FIG. 1.
[FIG. 7] FIG. 7 is a side view showing the positions of the engine, the clutch actuator, and the shift actuator in the straddled vehicle of FIG. 1.
[FIG. 8] FIG. 8 is a plan view showing the positions of a clutch actuator and a shift actuator in a straddled vehicle according to a second embodiment of the present teaching.
[FIG. 9] FIG. 9 is a side view showing the positions of an engine, the clutch actuator, and the shift actuator in the straddled vehicle of FIG. 8.
[FIG. 10] FIG. 10 is a side view showing the positions of the clutch actuator and the shift actuator in the straddled vehicle of FIG. 8

### Description of Embodiments

A straddled vehicle 1 that is an embodiment of an MT straddled vehicle equipped with a parallel multicylinder engine according to the present teaching will hereinafter be described in detail with reference to the drawings. The embodiment described below is merely an example. The present teaching shall not be considered limited to the embodiment below.

In this description, the front-rear direction of the straddled vehicle 1 is defined as "front-rear direction Y". In the front-rear direction Y, the front is defined as "front Fr". In the front-rear direction Y, the rear is defined as "rear Rr". The left-right direction of the straddled vehicle 1 (vehicle width direction) is defined as "left-right direction X". In the left-right direction X, the left is defined as "left L". In the left-right direction X, the right is defined as "right R". The up-down direction of the straddled vehicle 1 is defined as "up-down direction H". In the up-down direction H, the upper is defined as "upper Up". In the up-down direction H, the lower is defined as "lower Lw". The front, rear, upper, lower, left, and right of the straddled vehicle 1 are front, rear, upper, lower, left, and right from the perspective of a rider sitting on a seat 4 of the straddled vehicle 1.

In this description, an axis or a member extending in the left-right direction X does not necessarily mean an axis or a member extending parallel to the left-right direction X. An axis or a member extending in the left-right direction X includes an axis or a member inclined from the left-right direction X at a degree within a range of ± 45 degrees.

### <Overall Structure of Straddled Vehicle According to First Embodiment>

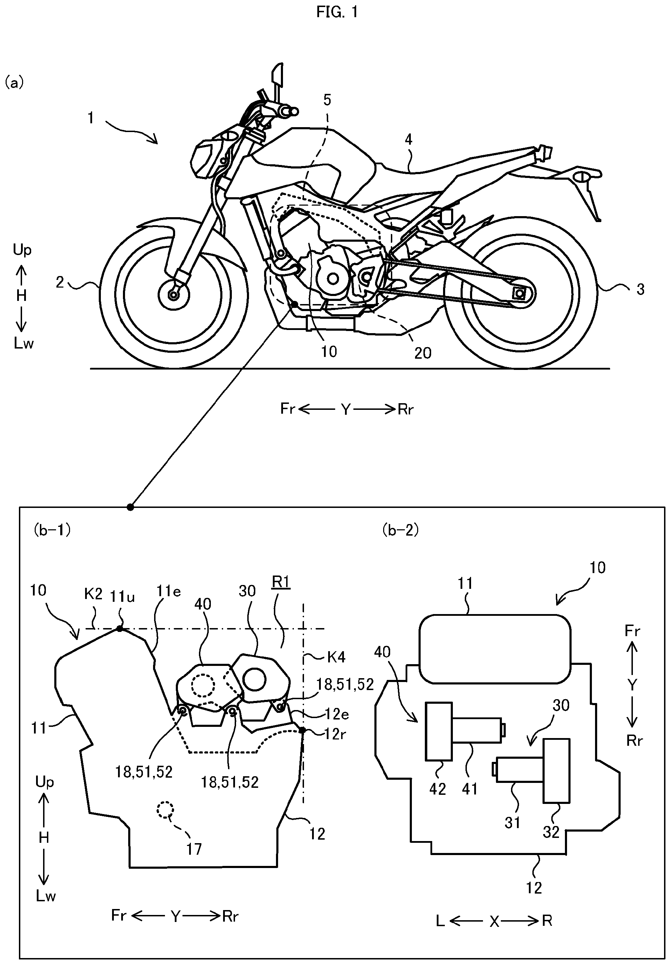

With reference to FIG. 1, the structure of the straddled vehicle 1 (MT straddled vehicle equipped with a parallel multicylinder engine) is described. FIG. 1 is a combination of a left-side view of the straddled vehicle 1 and a schematic view that shows the positions of an engine 10, a clutch actuator 30, and a shift actuator 40 in the straddled vehicle 1.

As shown in FIG. 1(a), the straddled vehicle 1 includes an engine 10, a multi-speed transmission 20, a front wheel 20, a rear wheel 3 serving as a drive wheel, a seat 4, and a vehicle frame 5. Power outputted from the engine 10 is transmitted to the rear wheel 3 via the multi-speed transmission 20, and thereby, the rear wheel 3 rotates to move the straddled vehicle 1.

The engine 10 is a parallel multicylinder engine. In the straddled vehicle 1 of the first embodiment, the engine 10 is a parallel three-cylinder engine with three cylinders 11 arranged in parallel with one another. Accordingly, the engine 10 of the straddled vehicle 1 of the first embodiment has a greater size in the left-right direction X than a single-cylinder engine or a twin-cylinder engine, and in the rear Rr of the cylinders 11, there is a space that is large in the left-right direction X. Thus, the engine 10 has a large size in the left-right direction X and is suited for horizontal layout of actuators (horizontal arrangement of motors).

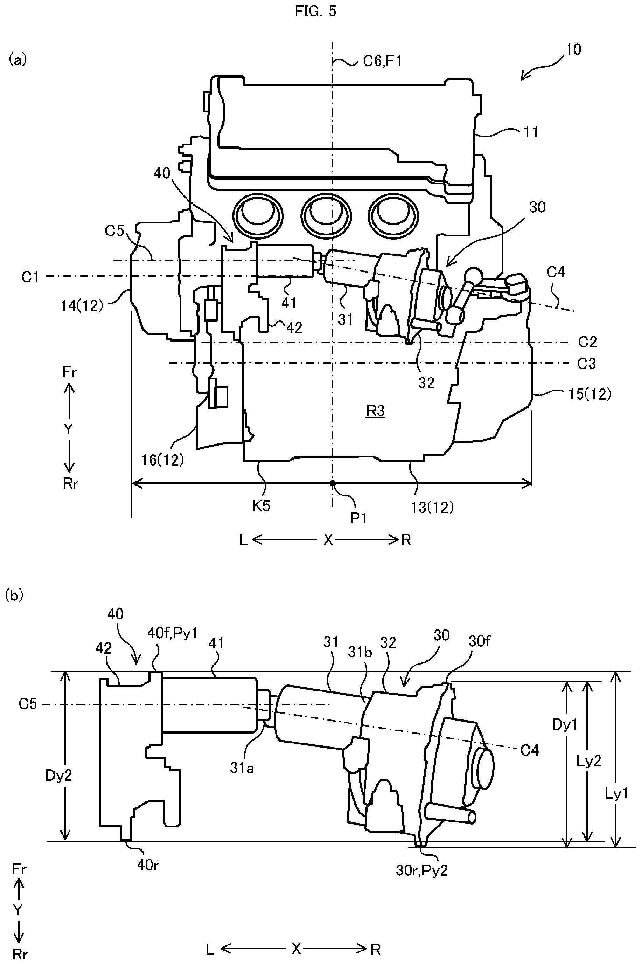

As shown in FIG. 1(b-1), the engine 10 has a crankcase 12 and a crankshaft 17 in addition to the cylinders 11. As shown in FIG. 1(b-1), the cylinders 11 are placed in a posture such that the upper Up thereof (cylinder head) is inclined frontward Fr. The axis C1 of the crankshaft 17 extends in the left-right direction X (see FIG. 5(a)).

As shown in FIG. 5(a), the crankcase 12 has a crankcase body 13, a case cover 14, a clutch cover 15, and a chain cover 16. The crankcase body 13 supports the crankshaft 17. The crankcase body 13 is a left-right separable type. The case cover 14 is located on the left L of the crankcase body 13. The clutch cover 15 is located on the right R of the crankcase body 13. The chain cover 16 is located on the left L of the crankcase body 13.

The multi-speed transmission 20 changes the transmission gear ratio between the engine 10 and the drive wheel (rear wheel 3 in this embodiment) in a multistep manner. The multi-speed transmission 20 changes the transmission gear ratio in accordance with operation of the rider of the straddled vehicle 1 in a multistep manner. The multi-speed transmission 20 is rotatably supported by the crankcase 12.

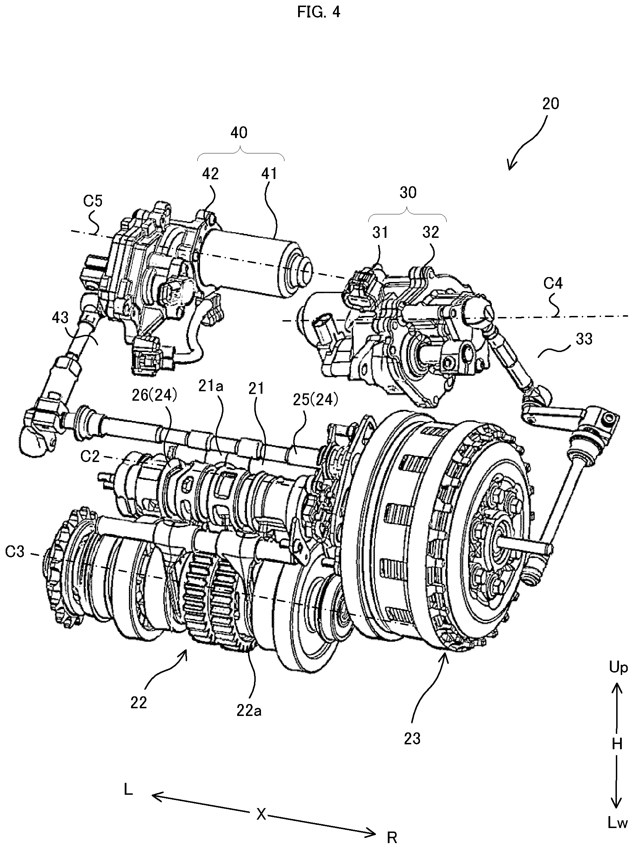

As shown in FIG. 4, the multi-speed transmission 20 includes an input shaft 21, an output shaft 22, a clutch 23, a shifter mechanism 24, a clutch actuator 30, and a shift actuator 40.

The input shaft 21 is rotatably supported by the crankcase body 13. As shown in FIG. 4, a plurality of drive gears 21a are attached to the input shaft 21. The output shaft 22 is rotatably supported by the crankcase 12. As shown in FIG. 4, additionally, a plurality of driven gears 22a that engage with the drive gears 21a are attached to the output shaft 22. The output shaft 22 outputs power toward the rear wheel 3. As shown in FIG. 4, the axis C2 of the input shaft 21 and the axis C3 of the output shaft 22 extend in the left-right direction X.

The shifter mechanism 24 includes a shift shaft 25 and a shift cam 26. The shift actuator 30 is linked with the shift shaft 25 and transmits power. When the shift shaft 25 rotates, the shift cam 26 rotates, whereby the gears on the input shaft 21 and output shaft 22 move in the axial direction, and in this way, a shift change is conducted.

The clutch 23 is located on a power transmission pathway from the crankshaft 17 to the output shaft 22. The clutch 23 is attached to the input shaft 21. The clutch 23 is a multiplate friction clutch. The clutch 23 is not only used to start moving the vehicle but also functions as a shift clutch that is disengaged for a shift change. The power transmission pathway is from the crankshaft 17, the input shaft 21, the drive gears 21a, the driven gears 22a, and to the output shaft 22 in this order.

The clutch actuator 30 and the shift actuator 40 constitute a shifting assist device that assists the rider's action for a shift change (the rider's shifting action). In the straddled vehicle 1, the shift motor 41 and the clutch motor 31 operate when the straddled vehicle 1 changes the shift (i.e., when the multi-speed transmission 20 conducts a shift change). For example, controlled by an ECU (electronic control unit) (not shown) provided in the straddled vehicle 1, the shift motor 41 and the clutch motor 31 operate. The time for a shift change of the straddled vehicle 1 is determined, for example, by the rider's operation of a shifting operation element (for example, a shift switch) provided in the straddled vehicle 1.

As shown in FIG. 4, the clutch actuator 30 includes the clutch motor 31, and a clutch gear box 32 containing a deceleration mechanism to which power of the clutch motor 31 is transmitted. This deceleration mechanism of the clutch actuator 30 is located on a power transmission pathway from the clutch motor 31 to the clutch 23.

As shown in FIG. 4, the shift actuator 40 includes the shift motor 41, and a shift gear box 42 containing a deceleration mechanism to which power of the shift motor 41 is transmitted. This deceleration mechanism of the shift actuator 40 is located on a power transmission pathway from the shift motor 41 to the shifter mechanism 24.

As shown in FIG. 4, the multi-speed transmission 20 includes, in addition to the components above, a first coupling device 33 (a lever, a rod, etc.) that connects the clutch actuator 30 and the clutch 23, a second coupling device 43 (a lever, a rod, etc.) that connects the shift actuator 40 and the shifter mechanism 24. Each component (lever, rod or the like) of the first coupling device 33 and the second coupling device 43 is displaceable within a specified range. In other words, each of the first coupling device 33 and the second coupling device 43 is a member that requires a motion range. In the straddled vehicle 1 of this embodiment, the clutch actuator 30 is an outer-pull type that is powered on from the outside of the clutch 23.

### <Arrangement of Actuators>

With reference to FIGS. 1(b-1) and 1(b-2), the arrangement of the clutch actuator 30 and the shift actuator 40 is described. Prior to describing the positions of these actuators 30 and 40, definitions of terms used in the following description are given.

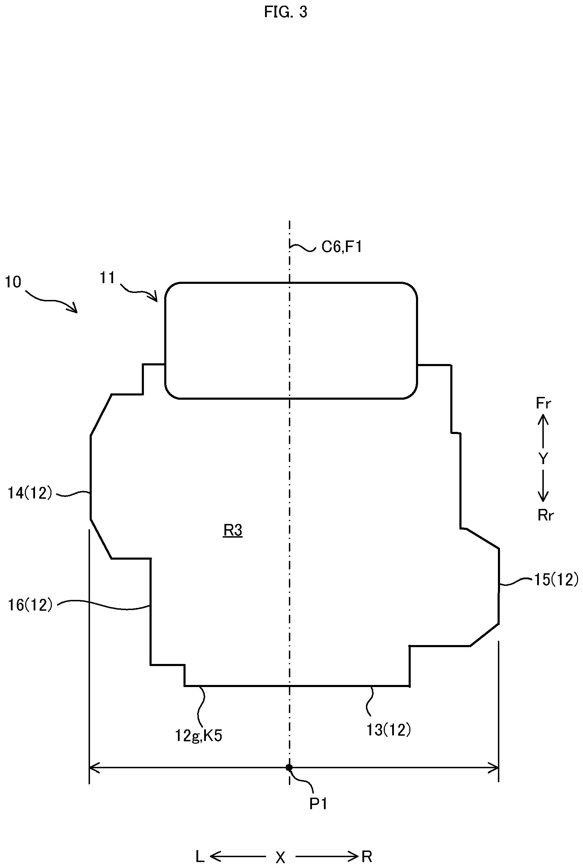

The term "case centerline C6" means a line that includes a midpoint P1, with respect to the left-right direction X, of the crankcase 12 and extends in the front-rear direction Y. The term "case center hypothetical plane F1" means a hypothetical plane that passes the case centerline C6 and spreads in the up-down direction H (see FIG. 3).

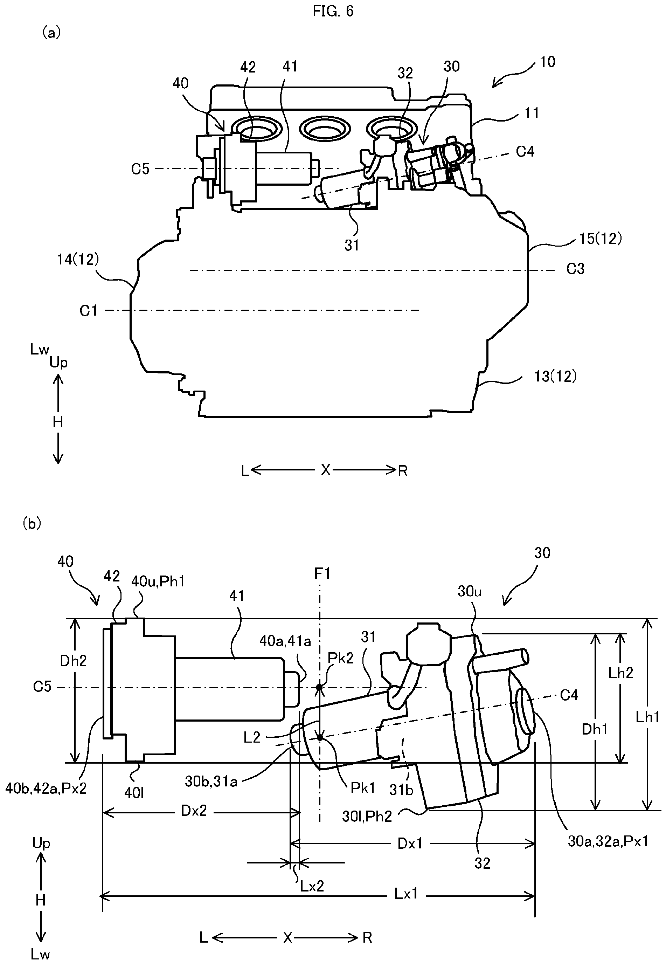

The term "inter-axial distance L2" means the distance from a first intersection point Pk1 between the case center hypothetical plane F1 and the axis C4 of the clutch motor 31 to a second intersection point Pk2 between the case center hypothetical plane F1 and the axis C5 of the shift motor 41 (see FIG. 6(b)).

The term "clutch actuator front-to-rear entire length Dy1" means the length in the front-rear direction Y of the clutch actuator 30, from the front end 30f to the rear end 30r, when the clutch actuator 30 is positioned in the straddled vehicle 1 (see FIG. 5(b)). The term "shift actuator front-to-rear entire length Dy2" means the length in the front-rear direction Y of the shift actuator 40, from the front end 40f to the rear end 40r, when the shift actuator 40 is positioned in the straddled vehicle 1 (see FIG. 5(b)).

The term "front-end reference position Py1" means either one of the front end 30f of the clutch actuator 30 and the front end 40f of the shift actuator 40 that is located more frontward Fr than the other (see FIG. 5(b)). The term "rear-end reference position Py2" means either one of the rear end 30r of the clutch actuator 30 and the rear end 40r of the shift actuator 40 that is located more rearward Rr than the other. The term "front-rear arrangement distance Ly1" means the distance in the front-rear direction Y between the front-end reference position Py1 and the rear-end reference position Py2.

The term "clutch actuator left-to-right entire length Dx1" means the length from the outer end 32a, with respect to the left-right direction X, of the clutch gear box 32 (right end of the clutch actuator 30) to the tip 31a of the clutch motor 31 (left end of the clutch actuator 30) when the clutch actuator 30 is positioned in the straddled vehicle 1 (see FIG. 6(b)). The term "shift actuator left-to-right entire length Dx2" means the length from the outer end 42a, with respect to the left-right direction X, of the shift gear box 42 (left end of the shift actuator 40) to the tip 41a of the shift motor 41 (right end of the shift actuator 40) when the shift actuator 40 is positioned in the straddled vehicle 1 (see FIG. 6(b)).

The term "right-end reference position Px1" means either one of the right end 30a of the clutch actuator 30 and the right end 40a of the shift actuator 40 that is located more rightward R than the other. The term "left-end reference position Px2" means either one of the left end 30b of the clutch actuator 30 and the left end 40b of the shift actuator 40 that is located more leftward L than the other (see FIG. 6(b)). The term "left-right arrangement distance Lx1" means the distance in the left-right direction X between the right-end reference position Px1 and the left-end reference position Px2.

The term "clutch actuator upper-to-lower entire length Dh1" means the length in the up-down direction H of the clutch actuator 30, from the upper end 30u to the lower end 301. The term "shift actuator upper-to-lower entire length Dh2" means the length in the up-down direction H of the shift actuator 40, from the upper end 40u to the lower end 401.

The term "upper-end reference position Ph1" means either one of the upper end 30u of the clutch actuator 30 and the upper end 40u of the shift actuator 40 that is located more upward Up than the other. The term "lower-end reference position Ph2" means either one of the lower end 301 of the clutch actuator 30 and the lower end 401 of the shift actuator 40 that is located more downward Lw than the other. The term "up-down arrangement distance Lh1" means the distance in the up-down direction H between the upper-end reference position Ph1 and the lower-end reference position Ph2.

The term "first region R1" means a region that in a looking-to-the-right or -left view, is between a straight line that extends in the up-down direction H passing through the rear end 12r, with respect to the front-rear direction Y, of the crankcase 12 (up-down hypothetical line K4) and the rear edge 11e of the cylinders 11 and is between a straight line that extends in the front-rear direction Y passing through the upper end 11u, with respect to the up-down direction H, of the cylinders 11 (front-rear hypothetical line K2) and the upper edge 12e of the crankcase 12 (see FIG. 1 (b-1)).

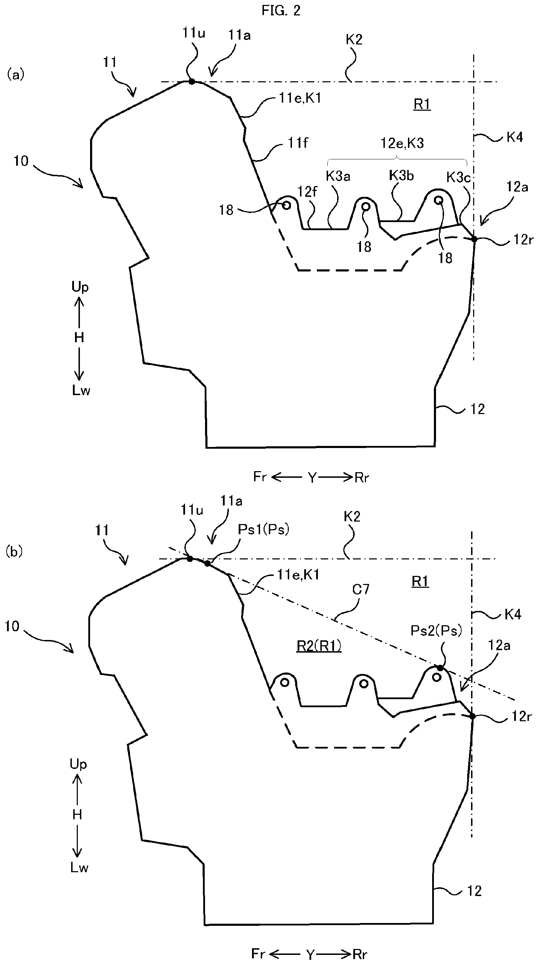

The "first region R1" is described in more detail with reference to FIG. 2(a). The "rear edge lIe of the cylinders 11" is a line that is seen as the edge of the rear faces 11f of the cylinders 11 (edge line K1) in a looking-to-the-right or -left view (which will hereinafter be referred to as "in a side view" in some cases). From another perspective, the "rear edge 11e of the cylinders 11" is a line that passes on the rear faces 11f of the cylinders 11 (i.e., is included in the rear faces 11f of the cylinders 11) and, in a side view, forms a boundary between the cylinders 11 and others (other components or space).

Also, as shown in FIG. 2(a), the "the upper end 11u, with respect to the up-down direction H, of the cylinders 11" is the uppermost (Up) point of the cylinders 11 in a side view. Furthermore, the "straight line that extends in the front-rear direction Y passing through the upper end 11u of the cylinders 11" is a straight line that, in a side view, passes through the upper end 11u of the cylinder 11 and extends in the front-rear direction Y (front-rear hypothetical line K2).

The "upper edge 12e of the crankcase 12" is a line that is seen as the edge of the upper face 12f of the crankcase 12 (the upper (Up) edge line of the crankcase 12) in a side view. From another perspective, the "upper edge 12e of the crankcase 12" is a line that passes on the upper face 12f of the crankcase 12 (i.e., is included in the upper face 12f of the crankcase 12) and, in a side view, forms a boundary between the crankcase 12 and others (other components or space).

For example, with reference to FIG. 2(a), the upper edge 12e of the crankcase 12 is an edge line K3 that is formed of an edge line of the left (L) portion of the crankcase 12 (in a left-side view, a first boundary line K3a and a third boundary line K3c in the near side) and an edge line of the right (R) portion of the crankcase 12 (in the left-side view, a second boundary line K3b in the far side).

As shown in FIG. 2(a), the "the rear end 12r, with respect to the front-rear direction Y, of the crankcase 12" is the rearmost (Rr) point of the crankcase 12 in a side view. The "straight line that extends in the up-down direction H passing through the rear end 12r, with respect to the front-rear direction Y, of the crankcase 12" is a straight line that, in a side view, passes through the rear end 12r of the crankcase 12 and extends in the up-down direction H (up-down hypothetical line K4).

As shown in FIG. 2(a), the "first region R1" is a region that, in a side view, is enclosed by the rear edge 11e of the cylinders 11 (edge line K1), the upper edge 12e of the crankcase 12 (edge line K3), the front-rear hypothetical line K2, and the up-down hypothetical line K4.

The term "hypothetical tangent line C7" is a tangent line that includes tangential points Ps in the upper portion 1 1a of the cylinders 11 and in the rear portion 12a of the crankcase 12. As shown in FIG. 2(b), in the straddled vehicle 1 of this embodiment, the hypothetical tangent line C7 includes a tangential point Ps1 in the upper portion 11a of the cylinders 11. Additionally, the hypothetical tangent line C7 includes a tangential point Ps2 in the rear portion 12a of the crankcase 12.

The "lower region R2" is a region that is lower Lw than the hypothetical tangent line C7 in a side view. As shown in FIG. 2(b), the "lower region R2" is included in the "first region R1". In other words, in the first region R1, a region that is bounded by and lower Lw than the hypothetical tangent line C7 is the lower region R2.

As shown in FIG. 3, a "third region R3" defined by the outer edge 12g of the crankcase 12 is a region that is enclosed by the outer edge 12g of the crankcase 12 in a looking-to-the-down view (which will hereinafter be referred to as "in a plan view" in some cases). In other words, the "third region R3" is an inner region bounded by the edge line K5 (outer edge 12g) of the crankcase 12 in a plan view.

In the straddled vehicle 1, as shown in FIGS. 1(b-1) and (b-2), the clutch actuator 30 and the shift actuator 40 are attached to the engine 10 not via the vehicle frame 5 in such a manner as to meet the following requirements (A) and (B): (A) the clutch gear box 32, the clutch motor 31, the shift motor 41, and the shift gear box 42 are arranged in the left-right direction X in this order; and (B) in a looking-to-the-right or -left view, each of the clutch actuator 30 and the shift actuator 40 is at least partly positioned between the straight line that extends in the up-down direction H passing through the rear end 12r, with respect to the front-rear direction Y, of the crankcase 12 (up-down hypothetical line K4) and the rear edge 11e of the cylinders 11 and between the straight line that extends in the front-rear direction Y passing through the upper end 11u, with respect to the up-down direction H, of the cylinders 11 (front-rear hypothetical line K2) and the upper edge 12e of the crankcase 12.

In the straddled vehicle 1, since the actuators 30 and 40 are attached to the engine 10 not via the vehicle frame 5 such that each of the actuators 30 and 40 is at least partly positioned in the first region R, the actuators 30 and 40 can be located close to the engine 10 by effective use of the space in the rear of the engine (first region R1), and the clutch gear box 32, the clutch motor 31, the shift motor 41, and the shift gear box 42 can be arranged in this order in the left-right direction X close to one another, i.e., compactly. Behind (Rr) the cylinders 11 and above (Up) the crankcase 12, various components (for example, an air cleaner, a rear suspension, etc.) are located, and the space there is limited. In the straddled vehicle 1, the actuators 30 and 40 of the multi-speed transmission 20 can be positioned close to the engine 10 and can be compactly arranged within the limited space. Since the straddled vehicle 1 is a vehicle that turns in accordance with the rider's weight shift, downsizing is highly demanded. In the straddled vehicle 1, the actuators 30 and 40 constituting the multi-speed transmission 20 can be arranged compactly, which contributes to downsizing of the vehicle.

As shown in FIG. 5(a), in the straddled vehicle 1 of the first embodiment, the clutch gear box 32 is positioned on the right R of the case centerline C6, and the shift gear box 42 is positioned on the left L of the case centerline C6. In the straddled vehicle 1, the clutch actuator 30 and the shift actuator 40 are arranged such that the clutch gear box 32, the clutch motor 31, the shift motor 41, the shift gear box 42 are arranged in this order in the left-right direction X from right R. As shown in FIG. 6, in a rear view of the straddled vehicle 1, the shift gear box 42, the shift motor 41, and the clutch gear box 32 are positioned on a straight line (for example, on the axis C5 of the shift motor 41), and the clutch motor 31 is positioned lower Lw than the axis C5 of the shift motor 41.

As shown in FIG. 5(a), in the straddled vehicle 1, the clutch actuator 30 and the shift actuator 40 are positioned within the third region R3. As shown in FIG. 6, in the straddled vehicle 1, the clutch actuator 30 is positioned low (Lw) relative to the shift actuator 40. More specifically, as shown in FIG. 6, in a rear view, the clutch gear box 32 is positioned low (Lw) relative to the shift gear box 42, and the clutch motor 31 is positioned low (Lw) relative to the shift motor 41.

As shown in FIG. 5, in the straddled vehicle 1, the respective axes of the clutch motor 31 and the shift motor 41 extend in the left-right direction X. The axis C5 of the shift motor 41 extends substantially parallel to the left-right direction X. Accordingly, the axis C5 of the shift motor 41 is parallel to the respective axes of the crankshaft 17, the input shaft 21, and the output shaft 22.

In the straddled vehicle 1 of this embodiment, meanwhile, the clutch motor 31 is inclined such that the tip 31a thereof faces down Lw and front Fr relative to its base end 31b. In other words, the axis C4 of the clutch motor 31 is at an angle to the left-right direction X. Accordingly, in the straddled vehicle 1 of this embodiment, the axis C4 of the clutch motor 31 is at an angle with (is inclined from) the axes parallel to the left-right direction X (the axis C5 of the shift motor 41, the axis C1 of the crankshaft 17, the axis C2 of the input shaft 21, and the axis C3 of the output shaft 22). In other words, in the straddled vehicle 1 of this embodiment, the axis C4 of the clutch motor 31 from the base end 31b to the tip 31a is at an acute angle (within ±45 degrees) to the left-right direction X.

As shown in FIG. 5(b), in the straddled vehicle 1 of this embodiment, the front-end reference position Py1 is the front end 40f of the shift actuator 40, which is positioned more frontward Fr than the front end 30f of the clutch actuator 30. In the straddled vehicle 1 of this embodiment, the rear-end reference position Py2 is the rear end 30r of the clutch actuator 30, which is positioned more rearward Rr than the rear end 40r of the shift actuator 40.

As shown in FIG. 5(b), in the straddled vehicle 1, the front-rear arrangement distance Ly1 is shorter than the total of the clutch actuator front-to-rear entire length Dy1 and the shift actuator front-to-rear entire length Dy2 (front-rear arrangement distance Ly1 < clutch actuator front-to-rear entire length Dy1 + shift actuator front-to-rear entire length Dy2). In other words, in the straddled vehicle 1, within the arrangement range in the front-rear direction Y of the clutch actuator 30 and the shift actuator 40, there is an overlap part where the clutch actuator 30 and the shift actuator 40 overlap (front-rear overlap part Ly2).

As shown in FIG. 6(b), in the straddled vehicle 1, the left-right arrangement distance Lx1 is shorter than the total of the clutch actuator left-to-right entire length Dx1 and the shift actuator left-to-right entire length Dx2 (left-right arrangement distance Lx1 < clutch actuator left-to-right entire length Dx1 + shift actuator left-to-right entire length Dx2). In other words, in the straddled vehicle 1, within the arrangement range in the left-right direction X of the clutch actuator 30 and the shift actuator 40, there is an overlap part where the clutch actuator 30 and the shift actuator 40 overlap (left-right overlap part Lx2).

As shown in FIG. 6(b), in the straddled vehicle 1 of this embodiment, the upper-end reference position Ph1 is the upper end 40u of the shift actuator 40, which is positioned more upward Up than the upper end 30u of the clutch actuator 30. In the straddled vehicle 1 of this embodiment, the lower-end reference position Ph2 is the lower end 30l of the clutch actuator 30, which is positioned more downward Lw than the lower end 40l of the shift actuator 40.

Furthermore, as shown in FIG. 6(b), in the straddled vehicle 1, the up-down arrangement distance Lh1 is shorter than the total of the clutch actuator upper-to-lower entire length Dh1 and the shift actuator upper-to-lower entire length Dh2 (up-down arrangement distance Lh1 < clutch actuator upper-to-lower entire length Dh1 + shift actuator upper-to-lower entire length Dh2). In other words, in the straddled vehicle 1, within the arrangement range in the up-down direction H of the clutch actuator 30 and the shift actuator 40, there is an overlap part where the clutch actuator 30 and the shift actuator 40 overlap (up-down overlap part Lh2).

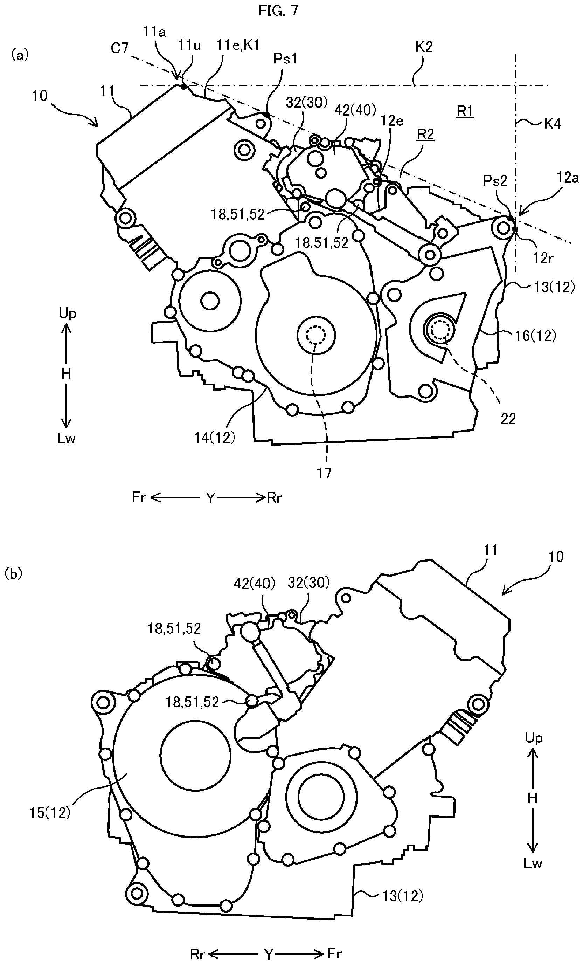

Thus, in the straddled vehicle 1, within the arrangement ranges in the front-rear direction Y and in the up-down direction H of the clutch actuator 30 and the shift actuator 40, there are overlap parts where the clutch actuator 30 and the shift actuator 40 overlap. Therefore, in the straddled vehicle 1, the clutch actuator 30 and the shift actuator 40 overlap in a side view (for example, in a left-side view). More specifically, as shown in FIG. 7, in the straddled vehicle 1, the clutch gear box 32 and the shift gear box 42 at least partly overlap in a view from the left-right direction X.

As shown in FIG. 7, in the straddled vehicle 1, the clutch actuator 30 and the shift actuator 40 are attached to the crankcase 12. On each of the clutch actuator 30 and the shift actuator 40, two bosses 51 are formed. On the crankcase 12, a plurality of bosses 18 (in this embodiment, a total of four bosses 18) are formed. Each of the actuators 30 and 40 is attached to the crankcase 12 by bolts 52. Thus, each of the actuators 30 and 40 is attached to the engine 10 (crankcase 12) not via the vehicle frame 5.

More specifically, as shown in FIG. 7(a), the shift actuator 40 has two bosses 51 in the lower (Lw) portion of the shift gear box 42, and these two bosses 51 are formed at a distance from each other in the front-rear direction Y. Also, the crankcase 12 has two bosses 18 in the left (L) portion thereof (the upper (Up) portion of the case cover 14). By connecting the bosses 51 of the shift actuator 40 and the bosses 18 of the crankcase 12 by bolts 52, the shift actuator 40 is attached to the crankcase 12.

Additionally, as shown in FIG. 7(b), the clutch actuator 30 has two bosses 51 in the lower (Lw) portion of the clutch gear box 32, and these two bosses 51 are formed at a distance from each other in the front-rear direction Y. Also, two bosses 18 are formed in the right (R) portion of the crankcase 12 (the upper (Up) portion of the clutch cover 15). By connecting the bosses 51 of the clutch actuator 30 and the bosses 18 of the crankcase 12 by bolts 52, the clutch actuator 30 is attached to the crankcase 12.

As shown in FIG. 7(a), in the straddled vehicle 1, each of the actuators 30 and 40 is at least partly positioned in the first region R1 in a side view. In the straddled vehicle 1, also, each of the clutch motor 31 and the shift motor 41 is at least partly positioned lower Lw than the hypothetical tangent line C7 (in the lower region R2). In this embodiment, each of the actuators 30 and 40 is almost entirely positioned in the lower region R2. Thus, both the clutch motor 31 and the shift motor 41 are positioned within the lower region R2.

### <Second Embodiment>

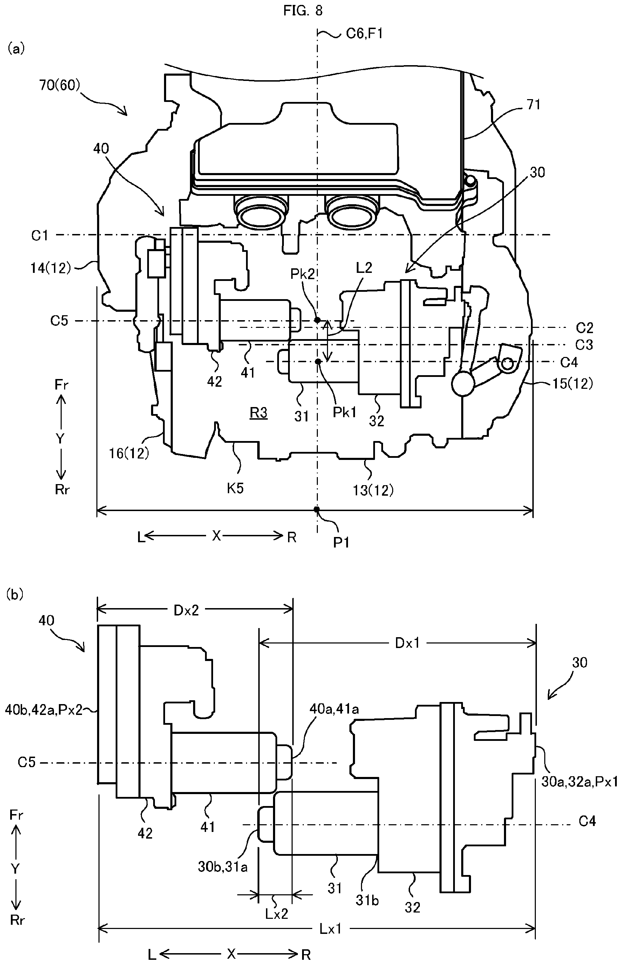

Next, with reference to FIGS. 8 to 10, a straddled vehicle 60 according to a second embodiment of an MT straddled vehicle equipped with a parallel multicylinder engine of the present teaching is described. A drawing of the whole straddled vehicle 60 is omitted. As with the straddled vehicle 1 according to the first embodiment, the straddled vehicle 60 has a front wheel 2, a rear wheel 3, a multi-speed transmission 20, etc.

The straddled vehicle 60 of the second embodiment includes an engine 70 that is a parallel twin-cylinder engine. As shown in FIG. 8, the engine 70 is a parallel multicylinder engine. In the straddled vehicle 60 of the second embodiment, the engine 70 is a parallel twin-cylinder engine with two cylinders 71 arranged in parallel.

Other than the engine 70, the components of the straddled vehicle 60 are the same in structure as the components of the straddled vehicle 1 of the first embodiment. Therefore, in the following description of the arrangement of the actuators 30 and 40 in the straddled vehicle 60 of the second embodiment, the same reference signs as used in the description of the straddled vehicle 1 of the first embodiment will be used, and a detailed description of the structure will be omitted.

As shown in FIG. 8(a), in the straddled vehicle 60 of the second embodiment, the clutch gear box 32 is located on the right R of the case centerline C6, and the shift gear box 42 is located on the left L of the case centerline C6. In the straddled vehicle 60, the clutch gear box 32, the clutch motor 31, the shift motor 41, and the shift gear box 42 are arranged in the left-right direction X in this order from right R. In a plan view of the straddled vehicle 60, the shift gear box 42, the shift motor 41, and the clutch gear box 32 are positioned on a straight line (for example, on the axis C5 of the shift motor 41), and the clutch motor 31 is positioned off the axis C5.

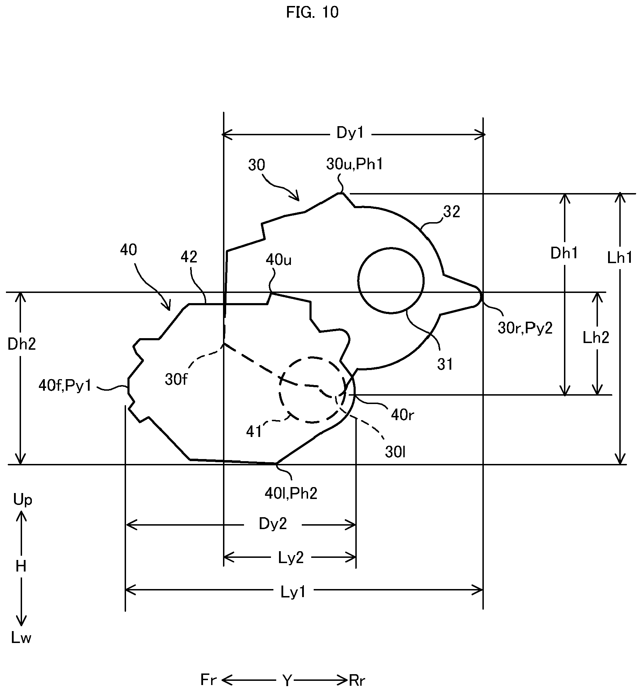

As shown in FIG. 8(a), in the straddled vehicle 60, the clutch actuator 30 and the shift actuator 40 are located within the third region R3. As shown in FIG. 10, in the straddled vehicle 60, the shift actuator 40 is positioned in front Fr relative to the clutch actuator 30.

As shown in FIG. 8, in the straddled vehicle 60, the respective axes of the clutch motor 30 and the shift motor 40 extend in the left-right direction X. The axis C4 of the clutch motor 31 and the axis C5 of the shift motor 41 are substantially parallel to the left-right direction X. Accordingly, the axis C4 of the clutch motor 30 and the axis C5 of the shift motor 41 are parallel to the respective axes of the crankshaft 17, the input shaft 21, and the output shaft 22.

As shown in FIG. 8(b), in the straddled vehicle 60 of the second embodiment, the right end 30a of the clutch actuator 30, which is positioned more rightward R than the right end 40a of the shift actuator 40, is the right-end reference position Px1. In the straddled vehicle 60 of this embodiment, the left end 40b of the shift actuator 40, which is positioned more leftward L than the left end 30b of the clutch actuator 30, is the left-end reference position Px2.

As shown in FIG. 8(b), in the straddled vehicle 60, the left-right arrangement distance Lx1 is shorter than the total of the clutch actuator left-to-right entire length Dx1 and the shift actuator left-to-right entire length Dx2 (left-right arrangement distance Lx1 < clutch actuator left-to-right entire length Dx1 + shift actuator left-to-right entire length Dx2). In other words, in the straddled vehicle 60, within the arrangement range in the left-right direction X of the clutch actuator 30 and the shift actuator 40, there is an overlap part where the clutch actuator 30 and the shift actuator 40 overlap (left-right overlap part Lx2).

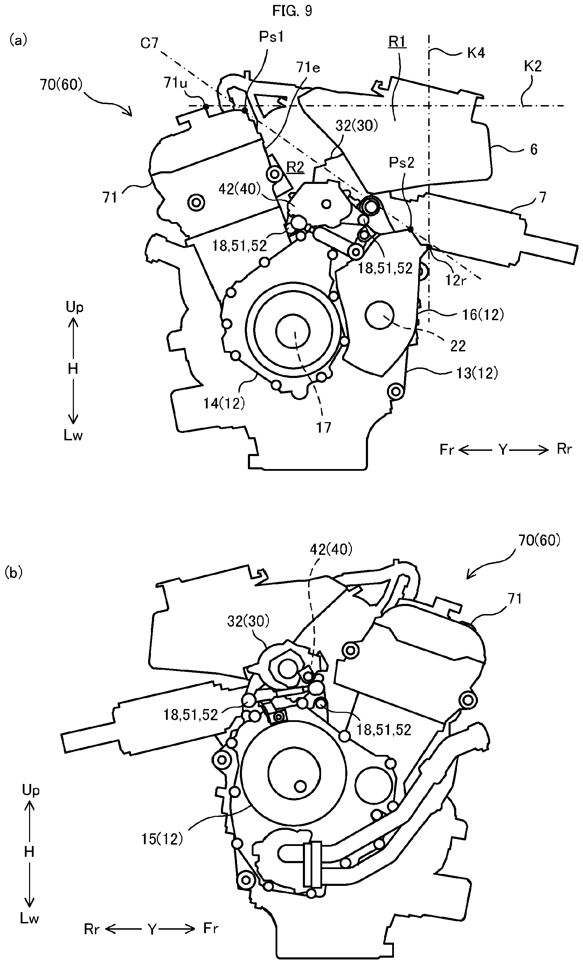

As shown in FIG. 9, in the straddled vehicle 60, the clutch actuator 30 and the shift actuator 40 are attached to the crankcase 12. On each of the clutch actuator 30 and the shift actuator 40, two bosses 51 are formed. On the crankcase 12, a plurality of bosses 18 (in this embodiment, a total of four bosses 18) are formed. Each of the actuators 30 and 40 is attached to the crankcase 12 by bolts 52. Thus, each of the actuators 30 and 40 is attached to the engine 70 (crankcase 12) not via the vehicle frame 5.

More specifically, as shown in FIG. 9(a), the shift actuator 40 has two bosses 51 in the lower (Lw) portion of the shift gear box 42, and these two bosses 51 are formed at a distance from each other in the front-rear direction Y. Also, the crankcase 12 has two bosses 18 in the left (L) portion thereof (the upper (Up) portion of the case cover 14). By connecting the bosses 51 of the shift actuator 40 and the bosses 18 of the crankcase 12 by bolts 52, the shift actuator 40 is attached to the crankcase 12.

Additionally, as shown in FIG. 9(b), the clutch actuator 30 has two bosses 51 in the lower (Lw) portion of the clutch gear box 32, and these two bosses 51 are formed at a distance from each other in the front-rear direction Y. Also, the crankcase 12 has two bosses 18 in the right (R) portion thereof (the upper (Up) portion of the clutch cover 15). By connecting the bosses 51 of the clutch actuator 30 and the bosses 18 of the crankcase 12 by bolts 52, the clutch actuator 30 is attached to the crankcase 12.

As shown in FIG. 9(a), in the straddled vehicle 60, each of the actuators 30 and 40 is at least partly positioned in the first region R1 in a side view. In the straddled vehicle 60, also, each of the clutch motor 31 and the shift motor 41 is at least partly positioned lower Lw than the hypothetical tangent line C7 (in the lower region R2). In the straddled vehicle 60 of this embodiment, each of the actuators 30 and 40 is almost entirely positioned in the lower region R2. Thus, both the clutch motor 31 and the shift motor 41 are positioned within the lower region R2.

As shown in FIG. 10, in the straddled vehicle 60 of the second embodiment, the front-end reference position Py1 is the front end 40f of the shift actuator 40, which is positioned more frontward Fr than the front end 30f of the clutch actuator 30. In the straddled vehicle 60 of this embodiment, the rear-end reference position Py2 is the rear end 30r of the clutch actuator 30, which is positioned more rearward Rr than the rear end 40r of the shift actuator 40.

As shown in FIG. 10, in the straddled vehicle 60, the front-rear arrangement distance Ly1 is shorter than the total of the clutch actuator front-to-rear entire length Dy1 and the shift actuator front-to-rear entire length Dy2 (front-rear arrangement distance Ly1 < clutch actuator front-to-rear entire length Dy1 + shift actuator front-to-rear entire length Dy2). In other words, in the straddled vehicle 60, within the arrangement range in the front-rear direction Y of the clutch actuator 30 and the shift actuator 40, there is an overlap part where the clutch actuator 30 and the shift actuator 40 overlap (front-rear overlap part Ly2).

As shown in FIG. 10, in the straddled vehicle 60, the upper-end reference position Ph1 is the upper end 30u of the clutch actuator 30, which is positioned more upward Up than the upper end 40u of the shift actuator 40. In the straddled vehicle 60, the lower-end reference position Ph2 is the lower end 40l of the shift actuator 40, which is positioned more downward Lw than the lower end 30l of the clutch actuator 30.

Furthermore, as shown in FIG. 10, in the straddled vehicle 60, the up-down arrangement distance Lh1 is shorter than the total of the clutch actuator upper-to-lower entire length Dh1 and the shift actuator upper-to-lower entire length Dh2 (up-down arrangement distance Lh1 < clutch actuator upper-to-lower entire length Dh1 + shift actuator upper-to-lower entire length Dh2). In other words, in the straddled vehicle 60, within the arrangement range in the up-down direction H of the clutch actuator 30 and the shift actuator 40, there is an overlap part where the clutch actuator 30 and the shift actuator 40 overlap (up-down overlap part Lh2).

Thus, in the straddled vehicle 60, within the arrangement ranges in the front-rear direction Y and in the up-down direction H of the clutch actuator 30 and the shift actuator 40, there are overlap parts where the clutch actuator 30 and the shift actuator 40 overlap. Therefore, in the straddled vehicle 60, the clutch actuator 30 and the shift actuator 40 overlap in a side view (for example, in a left-side view). More specifically, as shown in FIG. 9, in the straddled vehicle 60, the clutch gear box 32 and the shift gear box 42 at least partly overlap in a view from the left-right direction X.

As shown in FIG. 9, in the straddled vehicle 60, an air cleaner 6 is located above (Up) the crankcase 12, and a rear suspension 7 is located behind (Rr) the crankcase 12. In other words, in the straddled vehicle 60, in the region behind (Rr) the cylinders 71, the upper (Up) space is limited by the air cleaner 6, and the rear (Rr) space is limited by the rear suspension 7. In the straddled vehicle 60, the actuators 30 and 40 are arranged in the first region R1, and the motors 31 and 41 are arranged such that their respective axes C4 and C5 extend in the left-right direction X. Because of these and other ingenious arrangements, the limited space is effectively used.

As described above, in an MT straddled vehicle equipped with a parallel multicylinder engine according to the present teaching, the space behind the cylinders, which is limited by other components (air cleaner 6, rear suspension 7, etc.) is effectively used, and the actuators 30 and 40 can be compactly arranged.

### (Other Embodiments)

The embodiments and modifications described above and/or illustrated by the drawings are to make the present disclosure easier to understand and not to limit the concept of the present disclosure. It is possible to adapt or alter the embodiments and modifications described above without departing from the gist thereof. The gist includes all equivalent elements, modifications, omissions, combinations (for example, combinations of features of the embodiments and modifications), adaptations and alterations as would be appreciated by those in the art based on the embodiments and modifications disclosed herein. The limitations in the claims are to be interpreted broadly based on the language employed in the claims and not limited to the embodiments and modifications described in the present specification or during the prosecution of the present application. Such embodiments and modifications are to be understood as non-exclusive. For example, the terms "preferable" and "good" in the present specification are to be understood as non-exclusive, and these terms mean "preferable but not limited to this" and "good but not limited to this", respectively.

### List of Reference Signs

1: straddled vehicle (MT straddled vehicle equipped with a parallel multicylinder engine)
5: vehicle frame
10: engine
11: cylinder
11e: rear edge of cylinder
11u: upper end of cylinder
12: crankcase
12e: upper edge of crankcase
12r: rear end of crankcase
20: multi-speed transmission
30: clutch actuator
31: clutch motor (clutch actuator)
32: clutch gear box (clutch actuator)
40: shift actuator
41: shift motor (shift actuator)
42: shift gear box (shift actuator)
60: straddled vehicle (MT straddled vehicle equipped with a parallel multicylinder engine)
70: engine
71: cylinder
71e: rear edge of cylinder
71u: upper end of cylinder
H: up-down direction
K1: edge line (rear edge of cylinder)
K2: front-rear hypothetical line
K3: edge line (upper edge of crankcase)
K4: up-down hypothetical line
R1: first region
X: left-right direction
Y: front-rear direction

## Claims

1. An MT straddled vehicle (1, 60) equipped with a parallel multicylinder engine (10, 70), that includes a parallel multicylinder engine (10, 70) and a multi-speed transmission (20), the parallel multicylinder engine (10, 70) including a plurality of cylinders (11, 71) arranged in parallel, and a crankcase (12) supporting a crankshaft (17), wherein:
the multi-speed transmission (20) comprises:
an input shaft (21) that is rotatably supported by the crankcase (12), a plurality of drive gears (21a) being provided on the input shaft (21);
an output shaft (22) that is rotatably supported by the crankcase (12) and outputs power toward a drive wheel (3), a plurality of driven gears (22a) engaging with the drive gears (21a) being provided on the output shaft (22);
a clutch (23) located on a power transmission pathway from the crankshaft (17) to the output shaft (22);
a clutch actuator (30) including a clutch motor (31), and a clutch gear box (32) containing a deceleration mechanism to which power of the clutch motor (31) is transmitted, the deceleration mechanism being located on a power transmission pathway from the clutch motor (31) to the clutch (23);
a shift actuator (40) including a shift motor (41), and a shift gear box (42) containing a deceleration mechanism to which power of the shift motor (41) is transmitted, the deceleration mechanism being located on a power transmission pathway from the shift motor (41) to a shifter mechanism; and
the clutch actuator (30) and the shift actuator (40) are attached to the parallel multicylinder engine (10, 70) not via a vehicle frame (5) in such a manner as to meet the following requirements that:
the clutch gear box (32), the clutch motor (31), the shift motor (41), and the shift gear box (42) are arranged in this order in a left-right direction (X) of the vehicle (1, 60); and
in a looking-to-the-right or -left view, each of the clutch actuator (30) and the shift actuator (40) is at least partly positioned between a straight line (K4) that extends in an up-down direction (H) of the vehicle (1, 60) passing through a rear end (12r), with respect to a front-rear direction (Y) of the vehicle (1, 60), of the crankcase (12) and a rear edge (11e) of the cylinders (11, 71) and between a straight line (K2) that extends in the front-rear direction (Y) passing through an upper end (11u), with respect to the up-down direction (H), of the cylinders (11, 71) and an upper edge (12e) of the crankcase (12).

2. The MT straddled vehicle (1, 60) equipped with a parallel multicylinder engine (10, 70) according to claim 1, wherein the clutch actuator (30) and the shift actuator (40) are attached to the parallel multicylinder engine (10, 70) not via the vehicle frame (5) in such a manner as to further meet the following requirement that:
a left-right arrangement distance (Lx1) is shorter than a total of a clutch actuator left-to-right entire length (Dx1) and a shift actuator left-to-right entire length (Dx2), wherein:
the clutch actuator left-to-right entire length (Dx1) is a length in the left-right direction (X) of the clutch actuator (30), from a right end (30a) to a left end (30b), when the clutch actuator (30) is positioned in the vehicle (1, 60);
the shift actuator left-to-right entire length (Dx2) is a length in the left-right direction (X) of the shift actuator (40), from a right end (40a) to a left end (40b), when the shift actuator (40) is positioned in the vehicle (1, 60); and
the left-right arrangement distance (Lx1) is a distance in the left-right direction (X) between a right-end reference position (Px1) that is either one of the right end (30a) of the clutch actuator (30) and the right end (40a) of the shift actuator (40) that is located more rightward than the other and a left-end reference position (Px2) that is either one of the left end (30b) of the clutch actuator (30) and the left end (40b) of the shift actuator (40) that is located more leftward than the other.

3. The MT straddled vehicle (1, 60) equipped with a parallel multicylinder engine (10, 70) according to claim 1 or 2, wherein the clutch actuator (30) and the shift actuator (40) are attached to the parallel multicylinder engine (10, 70) not via the vehicle frame (5) in such a manner as to further meet the following requirement that:
the clutch gear box (32) and the shift gear box (42) are arranged in such a manner as to at least partly overlap in a looking-to-the-right or -left view.

4. The MT straddled vehicle (1, 60) equipped with a parallel multicylinder engine (10, 70) according to any one of claims 1 to 3, wherein the clutch actuator (30) and the shift actuator (40) are attached to the parallel multicylinder engine (10, 70) not via the vehicle frame (5) in such a manner as to further meet the following requirements that:
between the right (R) and the left (L) of a case centerline (C6),
the clutch gear box (32) is positioned on one side; and
the shift gear box (42) is positioned on the other side, wherein
the case centerline (C6) is a straight line that includes a midpoint (P1), with respect to the left-right direction (X), of the crankcase (12) and extends in the front-rear direction (Y) .

5. The MT straddled vehicle (1, 60) equipped with a parallel multicylinder engine (10, 70) according to any one of claims 1 to 4, wherein the clutch actuator (30) and the shift actuator (40) are attached to the parallel multicylinder engine (10, 70) not via the vehicle frame (5) in such a manner as to further meet the following requirement that:
each of the clutch motor (31) and the shift motor (41) is at least partly positioned lower than a hypothetical tangent line in a looking-to-the-right or -left view, wherein
the hypothetical tangent line (C7) is a tangent line that includes a tangential point (Ps1) in an upper portion (11a) of the cylinders (11, 71) and a tangential point (Ps2) in a rear portion (12a) of the crankcase (12).

6. The MT straddled vehicle (1, 60) equipped with a parallel multicylinder engine (10, 70) according to any one of claims 1 to 5, wherein the clutch actuator (30) and the shift actuator (40) are attached to the parallel multicylinder engine (10, 70) not via the vehicle frame (5) in such a manner as to further meet the following requirement that:
respective axes of the clutch motor (31) and the shift motor (41) extend in the left-right direction (X).
